# EUROPEAN PATENT SPECIFICATION

(11) **EP 3 270 651 B1**
(45) Date of publication and mention of the grant of the patent: **09.10.2024**
(21) Application number: 17171892.7
(22) Date of filing: 19.05.2017
(51) Int. Cl.: H04W 72/0446, H04B 7/26, H04W 28/18

(54) **DATA TRANSMISSION METHOD AND APPARATUS, COMPUTER PROGRAM, AND STORAGE MEDIUM**
DATENÜBERTRAGUNGSVERFAHREN UND -VORRICHTUNG, COMPUTERPROGRAMM UND SPEICHERMEDIUM
PROCÉDÉ ET APPAREIL DE TRANSMISSION DE DONNÉES, PROGRAMME INFORMATIQUE ET SUPPORT D'ENREGISTREMENT

(30) Priority: 13.07.2016 WO PCT/CN2016/089932
(43) Date of publication of application: 17.01.2018
(73) Proprietor: Beijing Xiaomi Mobile Software Co., Ltd., Beijing 100085 (CN)
(72) Inventor: ZHOU, Juejia, BEIJING, 100085 (CN); WANG, Li, BEIJING, 100085 (CN); ZHANG, Ming, BEIJING, 100085 (CN)
(74) Representative: Cabinet Beau de Loménie

(56) References cited:
- WO-A1-2017/194023
- HUAWEI ET AL: "Discussion on frame structure for NR", vol. RAN WG1, no. Nanjing, China; 20160523 - 20160527, 15 May 2016 (2016-05-15), XP051089779, Retrieved from the Internet <URL:http://www.3gpp.org/ftp/tsg_ran/WG1_RL1/TSGR1_85/Docs/> [retrieved on 20160515]
- QUALCOMM INCORPORATED: "TDD-specific processing time reduction and related procedures", vol. RAN WG1, no. Nanjing, China; 20160522 - 20160527, 14 May 2016 (2016-05-14), XP051096434, Retrieved from the Internet <URL:http://www.3gpp.org/ftp/tsg_ran/WG1_RL1/TSGR1_85/Docs/> [retrieved on 20160514]
- FUJITSU: "Discussion on flexible/dynamic TDD", vol. RAN WG1, no. Nanjing, China; 20160523 - 20160527, 13 May 2016 (2016-05-13), XP051090158, Retrieved from the Internet <URL:http://www.3gpp.org/ftp/tsg_ran/WG1_RL1/TSGR1_85/Docs/> [retrieved on 20160513]

## Description

### TECHNICAL FIELD

The invention relates to the field of mobile communications technologies, and more particularly to a data transmission method and apparatus, a computer program, and a storage medium.

### BACKGROUND

After several years of version evolution of wireless communications technologies, and with the increase of users' requirements, wireless communications technologies have evolved from the earliest 2G (second Generation) through 3G and 4G to the latest 5G gradually. Major improvements in 5G are made in aspects such as data transmission rate, coverage, delay and capacity.

Since entry into the 5G stage, it becomes important to satisfy the service requirement of providing flexible service configurations for various services including broadband connection, Internet of Things, Internet of Vehicles, wide area coverage and the like. Current service types of 5G include multiple types such as Enhanced Mobile Broad Band (eMBB), massive Machine Type Transmission (mMTC), and Ultra Reliable Low Latency Communication (URLLC).

For a URLLC service, an ultra low delay is a design objective for a system. This requires the system to allocate a relatively large bandwidth to a user to perform transmission within a time as short as possible, and to return an acknowledgement (ACK)/a negative acknowledgement (NACK) feedback within a shortest time.

Document Huawei er al.: "Discussion on frame structure for NR", 3GPP DRAFT; R1-164032, discloses a frame structure for new radio NR. Document Qualcomm Incorporated: "TDD-specific processing time reduction and related procedures", 3GPP DRAFT; R1-164462, discloses a slot-based TTI structure where shortened TTI downlink and uplink TTIs operate within the same downlink and uplink subframes, respectively, of the legacy system. Document Fujisu: "Discussion on flexible/dynamic TDD", 3GPP DRAFT; R1-16433, discloses a flexible/dynamic TDD including both downlink and uplink transmissions in the same sub-frame interval.

### SUMMARY

The invention is defined by a data transmission method according to claim 1, a data transmission apparatus according to claim 6, a storage medium according to claim 9 and a computer program according to claim 10. Further embodiments are defined by the dependent claims.

Any embodiment or example not claimed is only presented as information.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flowchart of a data transmission method according to an exemplary embodiment.
Fig. 2 is a schematic structural diagram of a TDD radio frame in related art.
Fig. 3 is a schematic structural diagram of two conventional subframes in a TDD radio frame in related art.
Fig. 4 is a schematic structural diagram of an example of a TDD radio frame according to an exemplary embodiment.
Fig. 5A and Fig. 5B are schematic structural diagrams of examples of a flexible subframe according to an exemplary embodiment.
Fig. 6 is a flowchart of determining configuration information of a semi-dynamically configured flexible subframe according to an exemplary embodiment.
Fig. 7 is a flowchart of another data transmission method according to an exemplary embodiment.
Fig. 8 is a block diagram of a data transmission apparatus according to an exemplary embodiment.
Fig. 9 is a block diagram of a determining module according to an exemplary embodiment.
Fig. 10 is a block diagram of another data transmission apparatus according to an exemplary embodiment.
Fig. 11 is a block diagram of an apparatus applicable to data transmission according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented.

Technologies, methods, and devices known to a person skilled in the art may be not discussed in detail. However, where appropriate, such technologies, methods, and devices should be considered as a part of the specification.

In all the examples shown and discussed here, any specific value should be construed as merely illustrative rather than limiting. Therefore, a different value may be used in another example of an exemplary embodiment.

It should be noted that similar reference numerals and letters represent similar items in the accompanying drawings. Therefore, once an item is defined in one accompanying drawing, the item does not need to be further discussed in the following accompanying drawings.

A data transmission method provided in the embodiments of the invention involves two ends of wireless transmission, which are a base station (for example, a NodeB) and a UE. The base station and the UE communicate with each other in a Time Division Duplexing (TDD) manner. The base station and the UE may transmit uplink data and downlink data in different uplink timeslots and downlink timeslots.

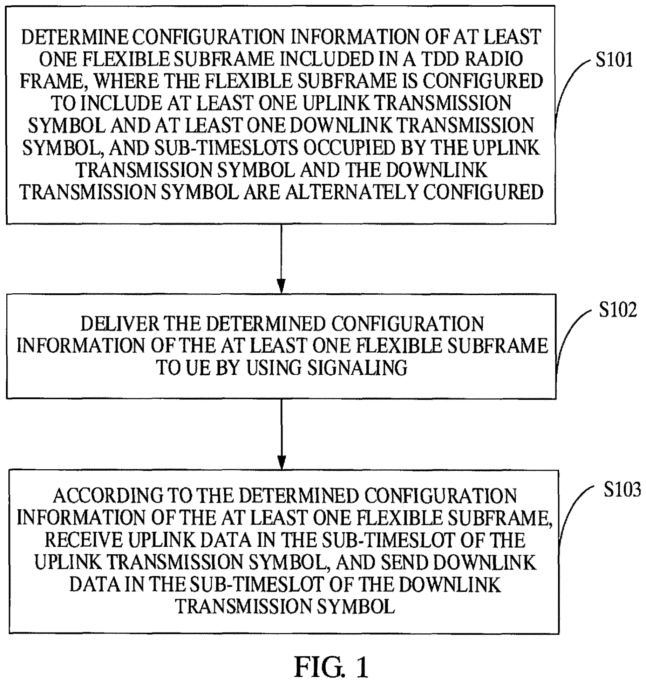

An embodiment of the invention provides a data transmission method. Referring to Fig. 1, the method implemented on a base station side includes the following steps.

In Step S101, configuration information of at least one flexible subframe included in a TDD radio frame is determined. The flexible subframe is configured to include at least one uplink transmission symbol and at least one downlink transmission symbol, and sub-timeslots occupied by the uplink transmission symbol and the downlink transmission symbol are alternately configured.

In Step S102, the determined configuration information of the at least one flexible subframe is delivered to a UE by using signaling.

In Step S103, uplink data is received in the sub-timeslot of the uplink transmission symbol and downlink data is sent in the sub-timeslot of the downlink transmission symbol, according to the determined configuration information of the at least one flexible subframe.

In the foregoing data transmission method provided in this embodiment of the invention, at least one flexible subframe included in a TDD radio frame used for transmission is configured to include at least one uplink transmission symbol and at least one downlink transmission symbol, and sub-timeslots occupied by the uplink transmission symbol and the downlink transmission symbol are alternately configured. In contrary to a subframe configuration solution of a TDD radio frame in related art in which one subframe (uplink subframe or downlink subframe) includes only a same type of transmission symbols (an uplink subframe includes only uplink transmission symbols, and a downlink subframe includes only downlink transmission symbols), such a flexible subframe enables configuration of uplink and downlink transmission symbols in a same subframe, so that feedback of an acknowledgement message from a UE can be rapidly performed, a transmission latency is reduced, and at the same time the number of UEs that can be connected can be increased by several times.

In an embodiment, in Step S101, the determined structure of the flexible subframe may include one or more uplink transmission symbols and one or more downlink transmission symbols, and sub-timeslots occupied by all uplink transmission symbols and downlink transmission symbols are disposed alternately with each other. A flexible subframe is a new subframe that is different from a TDD subframe in related art, and internally includes alternately disposed sub-timeslots that are occupied by the uplink transmission symbols and the downlink transmission symbols.

To better illustrate the data transmission method provided in this embodiment of the invention, a structure of a TDD radio frame in related art is first briefly described below.

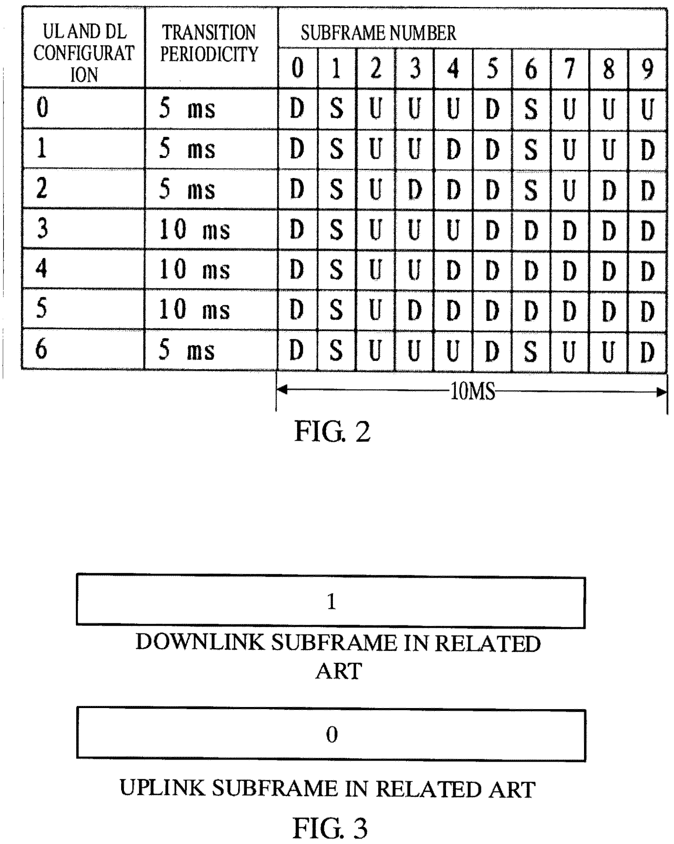

In related art, a TDD mode refers to a mode in which a same working frequency band is used for uplink and downlink, and an uplink signal and a downlink signal are transmitted at different time periods. Referring to Fig. 2 which illustrates a frame structure of a radio frame in a TDD system, one radio frame has a length of 10 ms, and includes ten subframes in total which are classified into two types, that is, special subframe and conventional subframe. Each subframe has a length of 1 ms. The conventional subframe includes an uplink subframe (represented by using the letter U) and a downlink subframe (represented by using the letter D). The special subframe (represented by using the letter S) includes three timeslots, that is, a Downlink Pilot Timeslot (DwPTS), a GP, and an Uplink Pilot Timeslot (UpPTS). The uplink subframe and the downlink subframe are used to transmit uplink and downlink control signaling and service data. Fig. 2 shows seven possible subframe ratio schemes.

In related art, as shown in Fig. 3, one uplink subframe or one downlink subframe includes only a same type of symbols. For example, a downlink subframe in Fig. 3 includes only downlink transmission symbols (represented by the number 1), and an uplink subframe in Fig. 3 includes only uplink transmission symbols (represented by the number 0). Because one uplink subframe or downlink subframe lasts 1 ms according to the structure of the TDD radio frame in related art, a NodeB may wait longer than several milliseconds for a UE to report an ACK message/a NACK message in case the UE reports the ACK message/the NACK message and the NodeB determines, according to the message, a time and a manner of retransmitting data. Taking an example where the second configuration D/D/D/S/U in Fig. 2 is used for performing data transmission (that is, one uplink subframe is configured for three downlink subframes), the NodeB needs to send three downlink subframes in the downlink and wait one timeslot before the NodeB may receive one uplink subframe, so that the latency is longer than 4 ms. Therefore, URLLC's requirement for a delay less than 1 ms cannot be met in related art.

To resolve the foregoing problem and reduce a transmission delay, in the foregoing data transmission method provided in this embodiment of the invention, the structures of the uplink subframe and the downlink subframe in related art are improved. Configuration of sub-timeslots corresponding to uplink and downlink transmission symbols can be flexibly implemented in one subframe. As a result, the UE may perform feedback of an ACK message/a NACK message within a relatively short time (at least shorter than 1 ms), thereby greatly reducing a transmission latency.

The base station may set locations and lengths of uplink and downlink transmission symbols in a flexible subframe of a TDD radio frame, according to service, network capacity, interference and the like. A preset length, for example, 1 ms, can be kept unchanged for a total length of the flexible subframe.

In a specific implementation, all or some of conventional subframes (including uplink and downlink subframes) in a TDD radio frame in related art may be replaced with the structure of the flexible subframe provided in this embodiment of the invention. The structure of the special subframe in the related art may be kept unchanged. For example, the structure of the subframe D or U in Fig. 2 (each subframe includes a same type of transmission symbols) continues to be used for some subframes, and the structure of the flexible subframe provided in this embodiment of the invention is used for other subframes; or the structures of all conventional subframes in the TDD radio frame are replaced with the structure of the flexible subframe provided in this embodiment of the invention.

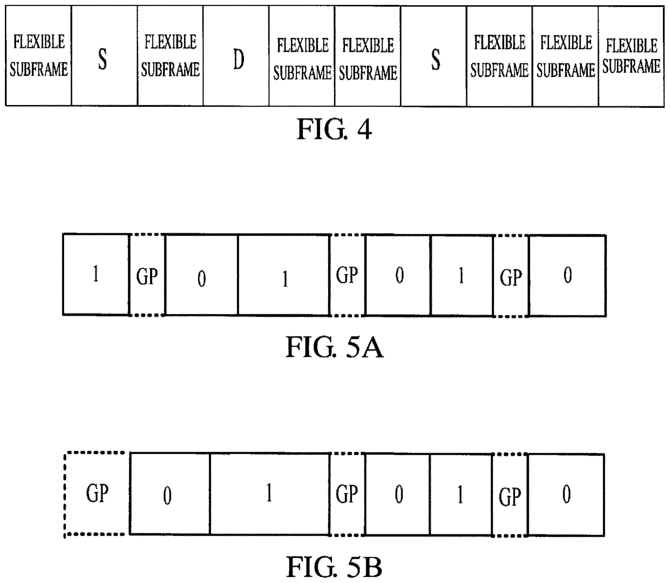

For example, if the second configuration shown in Fig. 2 is used, the foregoing subframe structure provided in this embodiment of the invention may be used for all the eight subframes at the locations U and D, and the structures of the eight subframes may be the same or different. Alternatively, as shown in Fig. 4, five of the eight subframes have the structure of the flexible subframe, and the structures of the rest subframes are the same as those in related art.

In a possible implementation of an exemplary embodiment of the invention, determining configuration information of a flexible subframe in a TDD radio frame in Step 101 may further include: setting a GP in the flexible subframe. The GP is located between a downlink transmission symbol and an uplink transmission symbol at transition from the downlink transmission symbol to the uplink transmission symbol.

In an embodiment, for a same flexible subframe, a GP may be further set between a downlink transmission symbol and an adjacent uplink transmission symbol at transition from the downlink transmission symbol to the uplink transmission symbol.

In a same subframe, when a transition from a downlink transmission symbol to an uplink transmission symbol (the uplink transmission symbol immediately follows the downlink transmission symbol) occurs according to a chronological order, it is required to set a GP between the downlink transmission symbol and the uplink transmission symbol that immediately follows the downlink transmission symbol. On one hand, the GP located at transition from the downlink transmission symbol to the uplink transmission symbol serves to prevent interference with an uplink signal from a downlink signal; on the other hand, due to presence of the GP, when multiple UEs exist, synchronization between the UEs can be ensured, thereby avoiding a blockage during data transmission, and improving the efficiency of data transmission.

For a structure of a TDD radio frame provided in this embodiment of the invention, a structure of a flexible subframe enables alternate transition between uplink and downlink, as long as a GP is set at transition from a downlink transmission symbol to an uplink transmission symbol. Locations and lengths of an uplink transmission symbol, a downlink transmission symbol, and a GP in each flexible subframe are not limited in this embodiment of the invention, and may be determined in a comprehensive manner according to service requirements, network coverage, capacity, interference and the like.

A structure of an exemplary flexible subframe is shown in Fig. 5A. In the example shown in Fig. 5A, the flexible subframe includes three GPs, which are respectively located at transitions from three downlink transmission symbols into their respective uplink transmission symbols.

In another embodiment, the GP is configured to be located between a downlink transmission symbol and an uplink transmission symbol in adjacent flexible subframes at transition from the downlink transmission symbol to the uplink transmission symbol.

For example, in a possible implementation of an exemplary embodiment of the invention, when a downlink transmission symbol exists at the tail of a previous subframe of a current flexible subframe (the previous subframe may be a conventional downlink subframe in related art or a flexible subframe in this embodiment of the invention) and an uplink transmission symbol exists at the head of the current flexible subframe, a GP may be set before the uplink transmission symbol at the head of the current flexible subframe.

In this embodiment of the invention, in addition to considering setting a GP between transmission symbols in a same flexible subframe, it is further required to consider setting a GP between a flexible subframe and a flexible subframe and setting a GP between a flexible subframe and a conventional subframe in related art. In this case, if a previous subframe is a downlink subframe in related art (all symbols are downlink transmission symbols) or if a transmission symbol at the tail of a previous subframe is a downlink transmission symbol, it is required to set a GP at the head of a current flexible subframe, that is, before an uplink transmission symbol that appears for the first time.

A structure of an exemplary flexible subframe is shown in Fig. 5B. In the example shown in Fig. 5B, a GP exists at the head of a flexible subframe, and in addition, two GPs are further included. The case is similar to that in Fig. 5A, and is no longer described here.

In the data transmission method provided in this embodiment of the invention, a structure of the determined flexible subframe is not limited to the two structures in Fig. 5A and Fig. 5B, and various forms may be used as long as the configuration principle is met. The structure is not limited in this embodiment of the invention.

Different GPs in a same flexible subframe may have the same length or may have different lengths. This is determined according to lengths of uplink and downlink transmission symbols.

In an embodiment, the at least one flexible subframe may include at least one dynamically configured flexible subframe. Correspondingly, Step S101 may be implemented as: periodically determining a location, occupation information, and a time length of each sub-timeslot in the dynamically configured flexible subframe.

A dynamically configured flexible subframe means that each part of the flexible subframe may be configured and reconfigured at various periodicities.

For a dynamically configured flexible subframe, within various periods, locations, lengths, and ratios of uplink transmission symbols, downlink transmission symbols, and GPs in the flexible subframe can be completely changed at various periodicities. The lengths, locations, and ratios of all the uplink transmission symbols, downlink transmission symbols, and GPs can be dynamically changed.

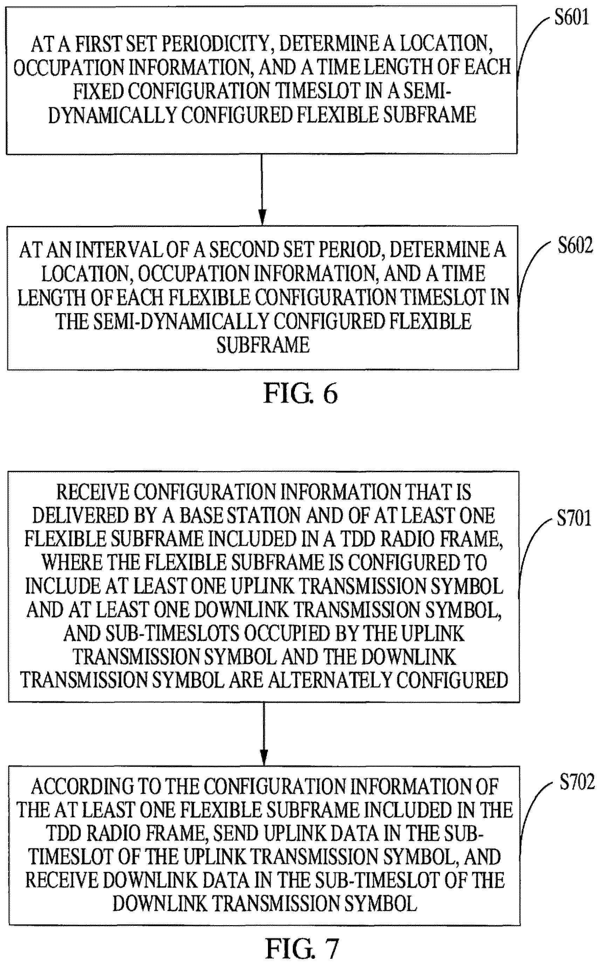

In an embodiment, the at least one flexible subframe may include a semi-dynamically configured flexible subframe. The semi-dynamically configured flexible subframe includes at least one fixedly configured timeslot and at least one flexibly configured timeslot. Correspondingly, as shown in Fig. 6, Step S101 may be implemented as follows.

In Step S601, a location, occupation information, and a time length of each fixedly configured timeslot in the semi-dynamically configured flexible subframe are determined at a first predetermined periodicity.

In Step S602, a location, occupation information, and a time length of each flexibly configured timeslot in the semi-dynamically configured flexible subframe are determined at a second predetermined periodicity.

The first predetermined periodicity is greater than the second predetermined periodicity.

A fixedly configured timeslot and a flexibly configured timeslot have different configuration periodicities. Correspondingly, in Step S102, after a location, occupation information, and a time length of each fixedly configured timeslot are determined, it is required to send information about locations, occupation information, and time lengths of these fixedly configured timeslots to the UE by using preset signaling. Similarly, after a location, occupation information, and a time length of each flexibly configured timeslot are determined, it is required to send information about locations, occupation information, and time lengths of these fixedly configured timeslots to the UE by using preset signaling.

In an extreme example, a configuration periodicity of a fixedly configured timeslot may be infinitely large. Thus, it is only needed to configure once the fixedly configured timeslot which no longer changes thereafter, but to keep changing the flexibly configured timeslot at a relatively short periodicity.

In Step S102, there may be multiple types of preset signaling. For example, the preset signaling may be any one of the following signaling: broadcast signaling, RRC signaling, and physical layer signaling. Certainly, this embodiment of the invention is not limited to the several types of signaling in the foregoing.

The periodicity length may be determined according to a periodicity of used signaling. For example, a periodicity configured for broadcast signaling is relatively long, and is approximately 640 ms. A periodicity configured for RRC signaling is moderate, and is approximately about 100 ms to 200 ms. A periodicity configured for physical layer signaling may be the shortest, and may be 10 ms or even shorter.

In Steps S601 and S602, at a relatively short periodicity, a location, occupation information, and a time length of a non-fixedly configured timeslot in a flexible subframe are changed through configuration. At these periodic times, it is possible to change a structure of only a non-fixedly configured timeslot in the flexible subframe, and it is only needed to send the structure information of the changed part to the UE. A location, occupation information, and a time length of a fixedly configured timeslot in a flexible subframe are changed only at a relatively long periodicity. Compared with a dynamically configured flexible subframe, such a data transmission manner may save overheads of control signaling to a certain degree, and facilitate finding out which symbols may potentially cause interference in an interference cancellation process. However, the flexibility is relatively low.

The first predetermined periodicity is greater than the second predetermined periodicity. As a result, the signaling used in Step S601 and the signaling used in Step S602 usually have different periodicities. For example, if broadcast signaling is used to send structure information of a fixedly configured timeslot part in a flexible subframe, reconfiguration takes place only about every 640 ms. For a non-fixedly configured timeslot part in the flexible subframe, signaling having a relatively short periodicity is used to perform configuration. For example, when physical layer signaling is used, configuration may take place every 10 ms or even shorter. The configuration of the non-fixedly configured timeslot part needs shorter-periodicity signaling. Generally speaking, the semi-dynamically configured flexible subframe saves more signaling overheads compared with the dynamically configured flexible subframe.

An embodiment of the invention provides another data transmission method. Referring to Fig. 7, the method, implemented on a UE side, includes the following steps.

In Step S701, configuration information of at least one flexible subframe included in a TDD radio frame is received from a base station. The flexible subframe is configured to include at least one uplink transmission symbol and at least one downlink transmission symbol, and sub-timeslots occupied by the uplink transmission symbol and the downlink transmission symbol are alternately configured.

In Step S702, uplink data is sent in the sub-timeslot of the uplink transmission symbol and downlink data is received in the sub-timeslot of the downlink transmission symbol, according to the configuration information of the at least one flexible subframe included in the TDD radio frame.

In the foregoing data transmission method provided in this embodiment of the invention, a UE receives configuration information of a flexible subframe included in a TDD radio frame from a base station. The flexible subframe includes at least one uplink transmission symbol and at least one downlink transmission symbol, and sub-timeslots occupied by the uplink transmission symbol and the downlink transmission symbol are alternately configured. In contrary to a subframe configuration solution of a TDD radio frame in related art in which one subframe (uplink subframe or downlink subframe) includes only a same type of transmission symbols (an uplink subframe includes only uplink transmission symbols, and a downlink subframe includes only downlink transmission symbols), such a flexible subframe enables configuration of uplink and downlink transmission symbols in a same subframe, so that feedback of an acknowledgement message from a UE can be rapidly performed, a transmission latency is reduced, and at the same time the number of UEs that can be connected can be increased by several times.

In an embodiment, the flexible subframe is configured to further include a GP, where the GP is located between a downlink transmission symbol and an uplink transmission symbol at transition from the downlink transmission symbol to the uplink transmission symbol.

Reference may be made to the data transmission method on the base station side for a specific implementation manner of the GP in the flexible subframe, which is no longer elaborated here.

In an embodiment, the GP is configured to be located between a downlink transmission symbol and an uplink transmission symbol in a same flexible subframe at transition from the downlink transmission symbol to the uplink transmission symbol. Alternatively, the GP is configured to be located between a downlink transmission symbol and an uplink transmission symbol in adjacent flexible subframes at transition from the downlink transmission symbol to the uplink transmission symbol.

In an embodiment, the at least one flexible subframe include at least one dynamically configured flexible subframe. Correspondingly, receiving configuration information of at least one flexible subframe included in a TDD radio frame from a base station in S701 may be implemented as: periodically receiving, from the base station, structure information of the at least one dynamically configured flexible subframe in the TDD radio frame. A location, occupation information, and a time length of each sub-timeslot in the dynamically configured flexible subframe are periodically and dynamically configured.

In an embodiment, the at least one flexible subframe includes at least one semi-dynamically configured flexible subframe. The semi-dynamically configured flexible subframe includes at least one fixedly configured timeslot and at least one flexibly configured timeslot. Correspondingly, receiving configuration information of at least one flexible subframe included in a TDD radio frame from a base station in S701 may be implemented as: at a first predetermined periodicity, receiving, from the base station, configuration information of a location, occupation information, and a time length of each fixedly configured timeslot in the at least one semi-dynamically configured flexible subframe in the radio frame; and at a second predetermined periodicity, receiving, from the base station, configuration information of a location, occupation information, and a time length of each flexibly configured timeslot in the at least one semi-dynamically configured flexible subframe in the radio frame. The first predetermined periodicity is greater than the second predetermined periodicity.

Embodiments of apparatuses of the invention are provided below. The apparatuses may be configured to perform the foregoing embodiments of the data transmission methods of the invention.

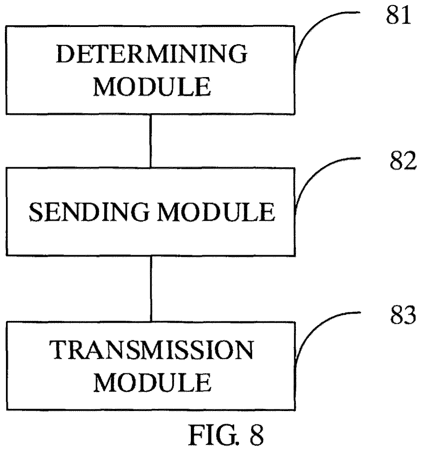

Fig. 8 is a block diagram of a data transmission apparatus according to an exemplary embodiment of the invention. The apparatus is used in a base station, and includes the following modules 81, 82 and 83 as shown in Fig. 8.

The determining module 81 is configured to determine configuration information of at least one flexible subframe included in a TDD radio frame. The flexible subframe is configured to include at least one uplink transmission symbol and at least one downlink transmission symbol, and sub-timeslots occupied by the uplink transmission symbol and the downlink transmission symbol are alternately configured.

The sending module 82 is configured to deliver the determined configuration information of the at least one flexible subframe to a UE by using signaling.

The transmission module 83 is configured to: according to the determined configuration information of the at least one flexible subframe, receive uplink data in the sub-timeslot of the uplink transmission symbol and send downlink data in the sub-timeslot of the downlink transmission symbol.

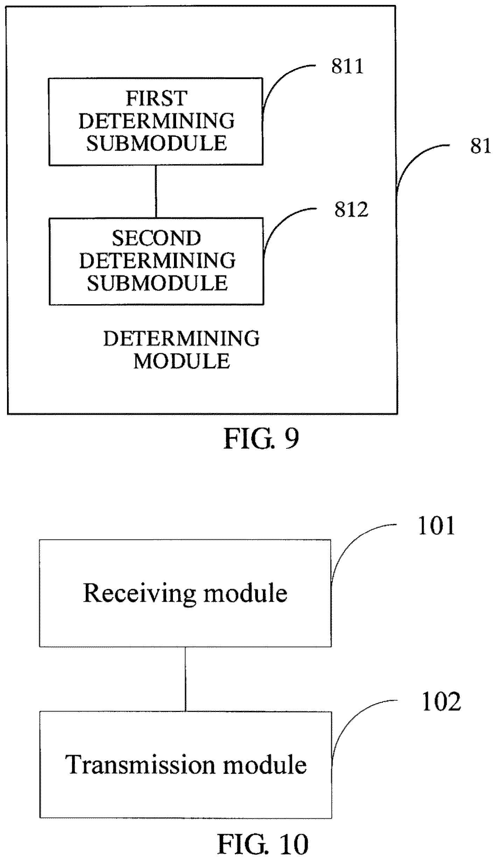

In an embodiment, as shown in Fig. 9, the determining module 81 includes: a first determining submodule 811 configured to determine configuration information of a GP in the flexible subframe. The GP is located between a downlink transmission symbol and an uplink transmission symbol at transition from the downlink transmission symbol to the uplink transmission symbol.

In an embodiment, the first determining submodule 811 is configured to determine that the GP is located between a downlink transmission symbol and an uplink transmission symbol in the same flexible subframe at transition from the downlink transmission symbol to the uplink transmission symbol; or that the GP is located between a downlink transmission symbol and an uplink transmission symbol in adjacent flexible subframes at transition from the downlink transmission symbol to the uplink transmission symbol.

In an embodiment, as shown in Fig. 9, the determining module 81 further includes: a second determining submodule 812.

The second determining submodule 812 is configured to: for each flexible subframe, determine a location and a time length of a sub-timeslot that is occupied by each uplink transmission symbol and a location and a time length of a sub-timeslot that is occupied by each downlink transmission symbol.

The first determining submodule 811 is configured to: when the flexible subframe is configured to further include a GP, determine a location and a time length of a sub-timeslot that is occupied by the GP.

In an embodiment, the at least one flexible subframe includes a dynamically configured flexible subframe. Correspondingly, the determining module 81 is configured to periodically determine a location, occupation information, and a time length of each sub-timeslot in the dynamically configured flexible subframe.

In an embodiment, the at least one flexible subframe includes a semi-dynamically configured flexible subframe, and the semi-dynamically configured flexible subframe includes at least one fixedly configured timeslot and at least one flexibly configured timeslot. Correspondingly, the determining module 81 is configured to: at a first predetermined periodicity, determine a location, occupation information, and a time length of each fixedly configured timeslot in the semi-dynamically configured flexible subframe; and at a second predetermined periodicity, determine a location, occupation information, and a time length of each flexibly configured timeslot in the semi-dynamically configured flexible subframe. The first predetermined periodicity is greater than the second predetermined periodicity.

In an embodiment, the signaling may include: broadcast signaling, RRC signaling, and physical layer signaling. However, this embodiment of the invention is not limited thereto.

Fig. 10 is a block diagram of another data transmission apparatus according to an exemplary embodiment of the invention. The apparatus is used in a UE, and includes the following modules 101 and 102 as shown in Fig. 10.

The receiving module 101 is configured to receive, from a base station, configuration information of at least one flexible subframe included in a TDD radio frame. The flexible subframe is configured to include at least one uplink transmission symbol and at least one downlink transmission symbol, and sub-timeslots occupied by the uplink transmission symbol and the downlink transmission symbol are alternately configured.

The transmission module 102 is configured to: according to the configuration information of the at least one flexible subframe included in the TDD radio frame, send uplink data in the sub-timeslot of the uplink transmission symbol and receive downlink data in the sub-timeslot of the downlink transmission symbol.

In an embodiment, the receiving module 101 is configured to receive configuration information of a GP in the flexible subframe. The GP is located between a downlink transmission symbol and an uplink transmission symbol at transition from the downlink transmission symbol to the uplink transmission symbol.

In an embodiment, the receiving module 101 is further configured to receive the configuration information of the GP in the flexible subframe, indicating one of the following: the GP is located between a downlink transmission symbol and an uplink transmission symbol in a same flexible subframe at transition from the downlink transmission symbol to the uplink transmission symbol; or the GP is located between a downlink transmission symbol and an uplink transmission symbol in adjacent flexible subframes at transition from the downlink transmission symbol to the uplink transmission symbol.

In an embodiment, the at least one flexible subframe includes at least one dynamically configured flexible subframe. Correspondingly, the receiving module 101 is configured to periodically receive, from the base station, structure information of the at least one dynamically configured flexible subframe in the TDD radio frame. A location, occupation information, and a time length of each sub-timeslot in the dynamically configured flexible subframe are periodically and dynamically configured.

In an embodiment, the at least one flexible subframe includes at least one semi-dynamically configured flexible subframe. The semi-dynamically configured flexible subframe includes at least one fixedly configured timeslot and at least one flexibly configured timeslot. Correspondingly, the receiving module 101 is configured to: at a first predetermined periodicity, receive, from the base station, configuration information of a location, occupation information, and a time length of each fixedly configured timeslot in the at least one semi-dynamically configured flexible subframe in the radio frame; and at a second predetermined periodicity, receive, from the base station, configuration information of a location, occupation information, and a time length of each flexibly configured timeslot in the at least one semi-dynamically configured flexible subframe in the radio frame. The first predetermined periodicity is greater than the second predetermined periodicity.

Regarding the apparatuses in the foregoing embodiments, specific manners in which various modules perform operations are already described in detail in the embodiments related to the methods, and will no longer be described in detail here.

With the data transmission method and apparatus, the computer program, and the storage medium provided in the embodiments of the invention, configuration information of at least one flexible subframe included in a TDD radio frame is first determined, where the flexible subframe is configured to include at least one uplink transmission symbol and at least one downlink transmission symbol, and sub-timeslots occupied by the uplink transmission symbol and the downlink transmission symbol are alternately configured; the determined configuration information of the at least one subframe is then sent to a UE by using signaling; and uplink data and downlink data are then transmitted according to the configuration information of the flexible subframe. In contrary to a subframe configuration solution of a TDD radio frame in related art in which one subframe (uplink subframe or downlink subframe) includes only a same type of transmission symbols (an uplink subframe includes only uplink transmission symbols, and a downlink subframe includes only downlink transmission symbols), configuration of uplink and downlink transmission symbols may be implemented in a same subframe, so that feedback of an acknowledgement message such as an ACK/a NACK from a UE can be rapidly performed, and a transmission latency is reduced desirably.

In another aspect, in the data transmission method provided in this embodiment of the invention, a flexible subframe includes a dynamically configured flexible subframe and a semi-dynamically configured flexible subframe, and a structure of the flexible subframe may be configured completely flexibly or configured partially flexibly, so that configuration of a TDD subframe becomes more flexible, and reconfiguration may be performed according to factors such as service type, network coverage, network capacity, and network interference, thereby fully meeting a requirement of an uplink-downlink asymmetric TDD service.

Moreover, compared with a dynamically configured flexible subframe, using a structure of a semi-dynamically configured flexible subframe to perform data transmission can facilitate saving overheads of control signaling, and facilitate determining which symbols may cause interference during interference cancellation.

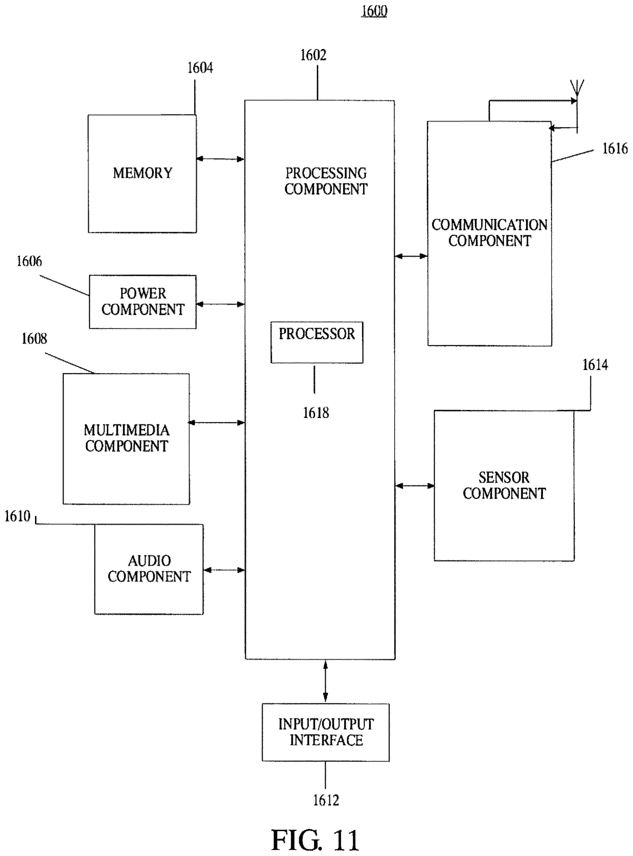

Fig. 11 is a block diagram of an apparatus applicable to data transmission according to an exemplary embodiment. For example, the apparatus 1600 may be a mobile phone, a computer, a digital broadcast terminal, a messaging device, a gaming console, a tablet device, a medical device, exercise equipment, a personal digital assistant, and the like.

Referring to Fig. 11, the apparatus 1600 may include one or more of the following components: a processing component 1602, a memory 1604, a power component 1606, a multimedia component 1608, an audio component 1610, an Input/Output (I/O) interface 1612, a sensor component 1614, and a communication component 1616.

The communication component 1616 includes a bluetooth module supporting a standard Bluethooth Low Enery (BLE) protocol. The bluetooth module includes a control chip and a bluetooth chip connected to the control chip.

The processing component 1602 typically controls overall operations of the apparatus 1600, such as the operations associated with display, telephone calls, data communications, camera operations, and recording operations. The processing component 1602 may include one or more processors 1618 to execute instructions to perform all or part of the steps in the above described methods. Moreover, the processing component 1602 may include one or more modules which facilitate the interaction between the processing component 1602 and other components. For instance, the processing component 1602 may include a multimedia module to facilitate the interaction between the multimedia component 1608 and the processing component 1602.

The memory 1604 is configured to store various types of data to support the operation of the apparatus 1600. Examples of such data include instructions for any applications or methods operated on the apparatus 1600, contact data, phonebook data, messages, pictures, video, etc. The memory 1604 may be implemented using any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or optical disk.

The power component 1606 provides power to various components of the apparatus 1600. The power component 1606 may include a power management system, one or more power sources, and any other components associated with the generation, management, and distribution of power in the apparatus 1600.

The multimedia component 1608 includes a screen providing an output interface between the apparatus 1600 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1608 includes a front camera and/or a rear camera. The front camera and the rear camera may receive an external multimedia datum while the apparatus 1600 is in an operation mode, such as a photographing mode or a video mode. Each of the front camera and the rear camera may be a fixed optical lens system or have focus and optical zoom capability.

The audio component 1610 is configured to output and/or input audio signals. For example, the audio component 1610 includes a microphone ("MIC") configured to receive an external audio signal when the apparatus 1600 is in an operation mode, such as a call mode, a recording mode, and a voice recognition mode. The received audio signal may be further stored in the memory 1604 or transmitted via the communication component 1616. In some embodiments, the audio component 1610 further includes a speaker to output audio signals.

The I/O interface 1612 provides an interface between the processing component 1602 and peripheral interface modules, such as a keyboard, a click wheel, buttons, and the like. The buttons may include, but are not limited to, a home button, a volume button, a starting button, and a locking button.

The sensor component 1614 includes one or more sensors to provide status assessments of various aspects of the apparatus 1600. For instance, the sensor component 1614 may detect an open/closed status of the apparatus 1600, relative positioning of components, e.g., the display and the keypad, of the apparatus 1600, a change in position of the apparatus 1600 or a component of the apparatus 1600, a presence or absence of user contact with the apparatus 1600, an orientation or an acceleration/deceleration of the apparatus 1600, and a change in temperature of the apparatus 1600. The sensor component 1614 may include a proximity sensor configured to detect the presence of nearby objects without any physical contact. The sensor component 1614 may also include a light sensor, such as a CMOS or CCD image sensor, for use in imaging applications. In some embodiments, the sensor component 1614 may also include an accelerometer sensor, a gyroscope sensor, a magnetic sensor, a pressure sensor, or a temperature sensor.

The communication component 1616 is configured to facilitate communication, wired or wirelessly, between the apparatus 1600 and other devices. The apparatus 1600 can access a wireless network based on a communication standard, such as WiFi, 2G, or 3G, or a combination thereof. In one exemplary embodiment, the communication component 1616 receives a broadcast signal or broadcast associated information from an external broadcast management system via a broadcast channel. In one exemplary embodiment, the communication component 1616 further includes a Near Field Communication (NFC) module to facilitate short-range communications. For example, the NFC module may be implemented based on a Radio Frequency Identification (RFID) technology, an Infrared Data Association (IrDA) technology, an Ultra-wideband (UWB) technology, a Bluetooth (BT) technology, and other technologies.

In exemplary embodiments, the apparatus 1600 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors, or other electronic components, for performing the above described methods.

In exemplary embodiments, there is also provided a non-transitory computer-readable storage medium including instructions, such as included in the memory 1604, executable by the processor 1618 in the apparatus 1600, for performing the above-described methods. For example, the non-transitory computer-readable storage medium may be a ROM, a CD-ROM, a magnetic tape, a floppy disc, an optical data storage device, and the like.

The invention further provides a storage medium having a computer program recorded thereon. The program includes instructions used to perform the data transmission method in the foregoing embodiments of the invention.

The invention further provides a computer program, which includes instructions for performing the data transmission method in the foregoing embodiments of the invention when the computer program is executed by a computer.

Other implementation solutions of the invention will be apparent to those skilled in the art from consideration of the specification and practice of the invention disclosed here. It is intended that the specification and examples be considered as exemplary only, with a true scope of the invention only be limited by the appended claims.

## Claims

1. A data transmission method, comprising:
determining (S101) configuration information of at least one flexible subframe comprised in a Time Division Duplex, TDD, radio frame, wherein the flexible subframe is configured to comprise at least one uplink transmission symbol and at least one downlink transmission symbol, and sub-timeslots occupied by the uplink transmission symbol and the downlink transmission symbol are alternately configured;
delivering (S102) the determined configuration information of the at least one flexible subframe to a user equipment, UE, by using signaling; and
according to the determined configuration information of the at least one flexible subframe, receiving (S103) uplink data in the sub-timeslot of the uplink transmission symbol and sending downlink data in the sub-timeslot of the downlink transmission symbol,
the method being **characterized in that**,
the flexible subframe is configured to further comprise at least two Guard Periods, GPs, one of the GPs is configured to be located between a downlink transmission symbol and an uplink transmission symbol, in adjacent flexible subframes, at transition from the downlink transmission symbol to the uplink transmission symbol, and, another one of the GPs is configured to be located between a downlink transmission symbol and an uplink transmission symbol, in a same flexible subframe, at transition from the downlink transmission symbol to the uplink transmission symbol.

2. The data transmission method of claim 1, wherein determining configuration information of at least one flexible subframe comprised in a TDD radio frame comprises:
for each flexible subframe, determining a location and a time length of a sub-timeslot that is occupied by each uplink transmission symbol and a location and a time length of a sub-timeslot that is occupied by each downlink transmission symbol; and
determining a location and a time length of a sub-timeslot that is occupied by the GPs.

3. The data transmission method of claim 1, wherein the at least one flexible subframe comprises a dynamically configured flexible subframe, and determining configuration information of the dynamically configured flexible subframe comprises:
periodically determining a location, occupation information, and a time length of each sub-timeslot in the dynamically configured flexible subframe.

4. The data transmission method of claim 1, wherein the at least one flexible subframe comprises a semi-dynamically configured flexible subframe, the semi-dynamically configured flexible subframe comprises at least one fixedly configured timeslot and at least one flexibly configured timeslot, and determining configuration information of the semi-dynamically configured flexible subframe comprises:
at a first predetermined periodicity, determining (S601) a location, occupation information, and a time length of each fixedly configured timeslot in the semi-dynamically configured flexible subframe; and
at a second predetermined periodicity, determining (S602) a location, occupation information, and a time length of each flexibly configured timeslot in the semi-dynamically configured flexible subframe, wherein
the first predetermined periodicity is greater than the second predetermined periodicity.

5. The data transmission method of claim 1, wherein the signaling includes: broadcast signaling, Radio Resource Control, RRC, signaling, and physical layer signaling.

6. A data transmission apparatus, comprising:
a determining module (81) configured to determine configuration information of at least one flexible subframe comprised in a Time Division Duplex, TDD, radio frame, wherein the flexible subframe is configured to comprise at least one uplink transmission symbol and at least one downlink transmission symbol, and sub-timeslots occupied by the uplink transmission symbol and the downlink transmission symbol are alternately configured;
a sending module (82) configured to deliver the determined configuration information of the at least one flexible subframe to a user equipment, UE, by using signaling; and
a transmission module (83) configured to, according to the determined configuration information of the at least one flexible subframe, receive uplink data in the sub-timeslot of the uplink transmission symbol and send downlink data in the sub-timeslot of the downlink transmission symbol,
the apparatus being **characterized in that** the determining module (81) comprises a first determining submodule (811), wherein
the first determining submodule (811) is configured to determine configuration information of at least two Guard Periods, GPs, in a flexible subframe, wherein the first determining submodule (811) is configured to determine that one of the GPs is located between a downlink transmission symbol and an uplink transmission symbol, in adjacent flexible subframes, at transition from the downlink transmission symbol to the uplink transmission symbol, and, that another one of the GPs is located between a downlink transmission symbol and an uplink transmission symbol, in a same flexible subframe, at transition from the downlink transmission symbol to the uplink transmission symbol.

7. The data transmission apparatus of claim 6, wherein the determining module (81) further comprises: a second determining submodule (812),
the second determining submodule (812) is configured to: for each flexible subframe, determine a location and a time length of a sub-timeslot that is occupied by each uplink transmission symbol and a location and a time length of a sub-timeslot that is occupied by each downlink transmission symbol, and
the first determining submodule (811) is configured to: determine a location and a time length of a sub-timeslot that is occupied by each of the GPs.

8. The data transmission apparatus of claim 6, wherein the at least one flexible subframe comprises a dynamically configured flexible subframe, and the determining module (81) is configured to periodically determine a location, occupation information, and a time length of each sub-timeslot in the dynamically configured flexible subframe.

9. A storage medium having a computer program recorded thereon, wherein the program comprises instructions for performing the method of any one of claims 1 to 5.

10. A computer program, comprising instructions for performing the method of any one of claims 1 to 5 when the program is executed by a computer.

## Patentansprüche

1. Datenübertragungsverfahren, umfassend:
Bestimmen (S101) von Konfigurationsinformationen mindestens eines flexiblen Subrahmens, der in einem Funkrahmen von Zeitduplex, TDD, enthalten ist, wobei der flexible Subrahmen konfiguriert ist, um mindestens ein Uplink-Übertragungssysmbol und mindestens ein Downlink-Übertragungssysmbol zu umfassen, und von dem Uplink-Übertragungssysmbol und dem Downlink-Übertragungssysmbol belegte Subzeitschlitze abwechselnd konfiguriert sind;
Übermitteln (S102) der bestimmten Konfigurationsinformationen des mindestens einen flexiblen Subrahmens durch Verwenden von Signalisierung an ein Benutzergerät, UE; und
gemäß den bestimmten Konfigurationsinformationen des mindestens einen flexiblen Subrahmens, Empfangen (S103) von Uplink-Daten in dem Subzeitschlitz des Uplink-Übertragungssymbols und Übertragen von Downlink-Daten in dem Subzeitschlitz des Downlink-Übertragungssymbols,
wobei das Verfahren **dadurch gekennzeichnet ist, dass**
der flexible Subrahmen konfiguriert ist, um ferner mindestens zwei Guard-Perioden, GPs, zu umfassen, wobei eine der GPs konfiguriert ist, um sich zwischen einem Downlink-Übertragungssymbol und einem Uplink-Übertragungssymbol in benachbarten flexiblen Subrahmen beim Übergang von dem Downlink-Übertragungssymbol zu dem Uplink-Übertragungssymbol zu befinden, und eine andere der GPs konfiguriert ist, um sich beim Übergang von dem Downlink-Übertragungssymbol zu dem Uplink-Übertragungssymbol zwischen einem Downlink-Übertragungssymbol und einem Uplink-Übertragungssymbol in demselben flexiblen Subrahmen zu befinden.

2. Datenübertragungsverfahren nach Anspruch 1, wobei ein Bestimmen von Konfigurationsinformationen mindestens eines flexiblen Subrahmens, der in einem TDD-Funkrahmen enthalten ist, Folgendes umfasst:
für jeden flexiblen Subrahmen, Bestimmen einer Stelle und einer Zeitdauer eines Subzeitschlitzes, der von jedem Uplink-Übertragungssymbol belegt wird, und einer Stelle und einer Zeitdauer eines Subzeitschlitzes, der von jedem Downlink-Übertragungssymbol belegt wird; und
Bestimmen einer Stelle und einer Zeitdauer eines Subzeitschlitzes, der von den GPs belegt wird.

3. Datenübertragungsverfahren nach Anspruch 1, wobei der mindestens eine flexible Subrahmen einen dynamisch konfigurierten flexiblen Subrahmen umfasst, und ein Bestimmen von Konfigurationsinformationen des dynamisch konfigurierten flexiblen Subrahmens Folgendes umfasst:
periodisches Bestimmen einer Stelle, von Belegungsinformationen und einer Zeitdauer von jedem Subzeitschlitz in dem dynamisch konfigurierten flexiblen Subrahmen.

4. Datenübertragungsverfahren nach Anspruch 1, wobei der mindestens eine flexible Subrahmen einen halbdynamisch konfigurierten flexiblen Subrahmen umfasst, der halbdynamisch konfigurierte flexible Subrahmen mindestens einen fest konfigurierten Zeitschlitz und mindestens einen flexibel konfigurierten Zeitschlitz umfasst, und ein Bestimmen von Konfigurationsinformationen des halbdynamisch konfigurierten flexiblen Subrahmens Folgendes umfasst:
bei einer ersten vorbestimmten Periodizität, Bestimmen (S601) einer Stelle, von Belegungsinformationen und einer Zeitdauer von jedem fest konfigurierten Zeitschlitz in dem halbdynamisch konfigurierten flexiblen Subrahmen; und
bei einer zweiten vorbestimmten Periodizität, Bestimmen (S602) einer Stelle, von Belegungsinformationen und einer Zeitdauer von jedem flexibel konfigurierten Zeitschlitz in dem halbdynamisch konfigurierten flexiblen Subrahmen, wobei
die erste vorbestimmte Periodizität größer ist als die zweite vorbestimmte Periodizität.

5. Datenübertragungsverfahren nach Anspruch 1, wobei die Signalisierung Folgendes beinhaltet: Ausstrahlungssignalisierung, Signalisierung von Funkressourcensteuerung, RRC, und Signalisierung von physikalischer Schicht.

6. Datenübertragungsvorrichtung, umfassend:
ein Bestimmungsmodul (81), das konfiguriert ist, um Konfigurationsinformationen mindestens eines flexiblen Subrahmens zu bestimmen, der in einem Funkrahmen von Zeitduplex, TDD, enthalten ist, wobei der flexible Subrahmen konfiguriert ist, um mindestens ein Uplink-Übertragungssysmbol und mindestens ein Downlink-Übertragungssysmbol zu umfassen, und von dem Uplink-Übertragungssysmbol und dem Downlink-Übertragungssysmbol belegte Subzeitschlitze abwechselnd konfiguriert sind;
ein Übertragungsmodul (82), das konfiguriert ist, um die bestimmten Konfigurationsinformationen des mindestens einen flexiblen Subrahmens durch Verwenden von Signalisierung an ein Benutzergerät, UE, bereitzustellen; und
ein Übertragungsmodul (83), das konfiguriert ist, um gemäß den bestimmten Konfigurationsinformationen des mindestens einen flexiblen Subrahmens Uplink-Daten in dem Subzeitschlitz des Uplink-Übertragungssysmbols zu empfangen und Downlink-Daten in dem Subzeitschlitz des Downlink-Übertragungssysmbols zu übertragen,
wobei die Vorrichtung **dadurch gekennzeichnet ist, dass** das Bestimmungsmodul (81) ein erstes Bestimmungsuntermodul (811) umfasst, wobei
das erste bestimmende Submodul (811) konfiguriert ist, um Konfigurationsinformationen von mindestens zwei Guard-Perioden, GPs, in einem flexiblen Subrahmen zu bestimmen, wobei das erste Bestimmungssubmodul (811) konfiguriert ist, um zu bestimmen, dass sich eine der GPs beim Übergang von dem Downlink-Übertragungssymbol zu dem Uplink-Übertragungssymbol zwischen einem Downlink-Übertragungssymbol und einem Uplink-Übertragungssymbol in benachbarten flexiblen Subrahmen befindet, und dass sich eine anderer de GPs beim Übergang von dem Downlink-Übertragungssymbol zu dem Uplink-Übertragungssymbol zwischen einem Downlink-Übertragungssymbol und einem Uplink-Übertragungssymbol in demselben flexiblen Subrahmen befindet.

7. Datenübertragungsvorrichtung nach Anspruch 6, wobei das Bestimmungsmodul (81) ferner Folgendes umfasst: ein zweites Bestimmungssubmodul (812),
wobei das zweite Bestimmungsuntermodul (812) zu Folgendem konfiguriert ist: für jeden flexiblen Subrahmen, Bestimmen einer Stelle und einer Zeitdauer eines Subzeitschlitzes, der von jedem Uplink-Übertragungssymbol belegt wird, und einer Stelle und einer Zeitdauer eines Subzeitschlitzes, der von jedem Downlink-Übertragungssymbol belegt wird, und
wobei das erste Bestimmungsuntermodul (811) zu Folgendem konfiguriert ist: Bestimmen einer Stelle und einer Zeitdauer eines Subzeitschlitzes, der von den GPs belegt wird.

8. Datenübertragungsvorrichtung nach Anspruch 6, wobei der mindestens eine flexible Subrahmen einen dynamisch konfigurierten flexiblen Subrahmen umfasst, und das Bestimmungsmodul (81) konfiguriert ist, um periodisch eine Stelle, Belegungsinformationen und eine Zeitdauer von jedem Subzeitschlitz in dem dynamisch konfigurierten flexiblen Subrahmen zu bestimmen.

9. Speichermedium, auf dem ein Computerprogramm aufgezeichnet ist, wobei das Programm Anweisungen zum Durchführen des Verfahrens nach einem der Ansprüche 1 bis 5 umfasst.

10. Computerprogramm, umfassend Anweisungen zum Durchführen des Verfahrens nach einem der Ansprüche 1 bis 5, wenn das Programm von einem Computer ausgeführt wird.

## Revendications

1. Procédé de transmission de données, comprenant le fait de :
déterminer (S101) des informations de configuration d'au moins une sous-trame flexible comprise dans une trame radio de duplexage par répartition dans le temps, TDD, dans laquelle la sous-trame flexible est configurée de manière à comprendre au moins un symbole de transmission en liaison montante et au moins un symbole de transmission en liaison descendante, et des sous-tranches de temps occupées par le symbole de transmission en liaison montante et le symbole de transmission en liaison descendante sont configurées de manière alternée ;
délivrer (S102) les informations de configuration déterminées de ladite au moins une sous-trame flexible à un équipement d'utilisateur, UE, à l'aide d'une signalisation ; et
selon les informations de configuration déterminées de ladite au moins une sous-trame flexible, recevoir (S103) des données de liaison montante dans la sous-tranche de temps du symbole de transmission en liaison montante et envoyer des données de liaison descendante dans la sous-tranche de temps du symbole de transmission en liaison descendante ;
le procédé étant **caractérisé en ce que**,
la sous-trame flexible est configurée de manière à comprendre en outre au moins deux périodes de garde, GP, l'une des périodes GP est configurée de manière à être située entre un symbole de transmission en liaison descendante et un symbole de transmission en liaison montante, dans des sous-trames flexibles adjacentes, lors d'une transition du symbole de transmission en liaison descendante au symbole de transmission en liaison montante, et une autre des périodes GP est configurée de manière à être située entre un symbole de transmission en liaison descendante et un symbole de transmission en liaison montante, dans une même sous-trame flexible, lors d'une transition du symbole de transmission en liaison descendante au symbole de transmission en liaison montante.

2. Procédé de transmission de données selon la revendication 1, dans lequel la détermination des informations de configuration d'au moins une sous-trame flexible comprise dans une trame radio de duplexage TDD comprend le fait de :
pour chaque sous-trame flexible, déterminer un emplacement et une durée temporelle d'une sous-tranche de temps qui est occupée par chaque symbole de transmission en liaison montante, et un emplacement et une durée temporelle d'une sous-tranche de temps qui est occupée par chaque symbole de transmission en liaison descendante ; et
déterminer un emplacement et une durée temporelle d'une sous-tranche de temps qui est occupée par les périodes GP.

3. Procédé de transmission de données selon la revendication 1, dans lequel ladite au moins une sous-trame flexible comprend une sous-trame flexible configurée dynamiquement, et la détermination des informations de configuration de la sous-trame flexible configurée dynamiquement comprend le fait de :
déterminer périodiquement un emplacement, des informations d'occupation et une durée temporelle de chaque sous-tranche de temps dans la sous-trame flexible configurée dynamiquement.

4. Procédé de transmission de données selon la revendication 1, dans lequel ladite au moins une sous-trame flexible comprend une sous-trame flexible configurée de manière semi-dynamique, la sous-trame flexible configurée de manière semi-dynamique comprend au moins une tranche de temps configurée de manière fixe et au moins une tranche de temps configurée de manière flexible, et la détermination des informations de configuration de la sous-trame flexible configurée de manière semi-dynamique comprend le fait de :
à une première périodicité prédéterminée, déterminer (S601) un emplacement, des informations d'occupation et une durée temporelle de chaque tranche de temps configurée de manière fixe dans la sous-trame flexible configurée de manière semi-dynamique ; et
à une deuxième périodicité prédéterminée, déterminer (S602) un emplacement, des informations d'occupation et une durée temporelle de chaque tranche de temps configurée de manière flexible dans la sous-trame flexible configurée de manière semi-dynamique, dans laquelle
la première périodicité prédéterminée est plus grande que la deuxième périodicité prédéterminée.

5. Procédé de transmission de données selon la revendication 1, dans lequel la signalisation inclut : une signalisation de diffusion, une signalisation de commande de ressources radio, RRC, et une signalisation de couche physique.

6. Appareil de transmission de données, comprenant :
un module de détermination (81) configuré de manière à déterminer des informations de configuration d'au moins une sous-trame flexible comprise dans une trame radio de duplexage par répartition dans le temps, TDD, dans laquelle la sous-trame flexible est configurée de manière à comprendre au moins un symbole de transmission en liaison montante et au moins un symbole de transmission en liaison descendante, et des sous-tranches de temps occupées par le symbole de transmission en liaison montante et le symbole de transmission en liaison descendante sont configurées de manière alternée ;
un module d'envoi (82) configuré de manière à délivrer les informations de configuration déterminées de ladite au moins une sous-trame flexible à un équipement d'utilisateur, UE, à l'aide d'une signalisation ; et
un module de transmission (83) configuré de manière à, selon les informations de configuration déterminées de ladite au moins une sous-trame flexible, recevoir des données de liaison montante dans la sous-tranche de temps du symbole de transmission en liaison montante et envoyer des données de liaison descendante dans la sous-tranche de temps du symbole de transmission en liaison descendante ;
l'appareil étant **caractérisé en ce que** le module de détermination (81) comprend un premier sous-module de détermination (811), dans lequel
le premier sous-module de détermination (811) est configuré de manière à déterminer des informations de configuration d'au moins deux périodes de garde, GP, dans une sous-trame flexible, dans lequel le premier sous-module de détermination (811) est configuré de manière à déterminer que l'une des périodes GP est située entre un symbole de transmission en liaison descendante et un symbole de transmission en liaison montante, dans des sous-trames flexibles adjacentes, lors d'une transition du symbole de transmission en liaison descendante au symbole de transmission en liaison montante, et qu'une autre des périodes GP est située entre un symbole de transmission en liaison descendante et un symbole de transmission en liaison montante, dans une même sous-trame flexible, lors d'une transition du symbole de transmission en liaison descendante au symbole de transmission en liaison montante.

7. Appareil de transmission de données selon la revendication 6, dans lequel le module de détermination (81) comprend en outre : un deuxième sous-module de détermination (812),
dans lequel le deuxième sous-module de détermination (812) est configuré de manière à : pour chaque sous-trame flexible, déterminer un emplacement et une durée temporelle d'une sous-tranche de temps qui est occupée par chaque symbole de transmission en liaison montante, et un emplacement et une durée temporelle d'une sous-tranche de temps qui est occupée par chaque symbole de transmission en liaison descendante ; et
dans lequel le premier sous-module de détermination (811) est configuré de manière à : déterminer un emplacement et une durée temporelle d'une sous-tranche de temps qui est occupée par chacune des périodes GP.

8. Appareil de transmission de données selon la revendication 6, dans lequel ladite au moins une sous-trame flexible comprend une sous-trame flexible configurée dynamiquement, et le module de détermination (81) est configuré de manière à déterminer périodiquement un emplacement, des informations d'occupation et une durée temporelle de chaque sous-tranche de temps dans la sous-trame flexible configurée dynamiquement.

9. Support de stockage sur lequel est enregistré un programme informatique, dans lequel le programme comprend des instructions pour mettre en oeuvre le procédé selon l'une quelconque des revendications 1 à 5.

10. Programme informatique comprenant des instructions pour mettre en oeuvre le procédé selon l'une quelconque des revendications 1 à 5 lorsque le programme est exécuté par un ordinateur.
